(19) Europäisches Patentamt / European Patent Office / Office européen des brevets

(11) **EP 1 923 421 A1**

(12) **EUROPEAN PATENT APPLICATION**
published in accordance with Art. 153(4) EPC

(43) Date of publication:
**21.05.2008 Bulletin 2008/21**

(21) Application number: **06797466.7**

(22) Date of filing: **05.09.2006**

(51) Int Cl.:
*C08J 9/06* (2006.01)     *G10K 11/16* (2006.01)
*G10K 11/162* (2006.01)

(86) International application number:
**PCT/JP2006/317566**

(87) International publication number:
**WO 2007/034672 (29.03.2007 Gazette 2007/13)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **08.09.2005 JP 2005261283**

(71) Applicants:
• **Sekisui Chemical Co., Ltd.**
**Osaka 530-8565 (JP)**
• **Alveo AG**
**6002 Luzern (CH)**

(72) Inventors:
• **INUI, Nobuhiko**
**Hasuda-shi**
**Saitama; 3490101 (JP)**

• **YAMADA, Joji**
**Hasuda-shi**
**Saitama; 3490101 (JP)**
• **OFFERMANNS, Eduard Karel**
**6461 BC Kerkrade (NL)**
• **DUIJSENS, Armand Alphons**
**6243 AH Geulle (NL)**
• **VOGELS, Laurens Petrus**
**6021 ZS Budel (NL)**

(74) Representative: **Hollatz, Christian**
**ter Meer Steinmeister & Partner GbR**
**Mauerkircherstrasse 45**
**D-81679 München (DE)**

(54) **SOUND INSULATING MATERIAL**

(57)     This invention provides a sound insulating material that has excellent sound insulating properties and moldability. The sound insulating material comprises an inorganic compound contained in a thermoplastic resin foam and is **characterized in that** the inorganic compound is contained in an amount of 30 to 300 parts by weight based on 100 parts by weight of the thermoplastic resin constituting the thermoplastic resin foam. The sound insulating material has excellent sound insulating properties and moldability and can be molded into a form conforming to the shape of a member to be sound insulated by a conventional molding method with good accuracy. Accordingly, the sound insulating material can be stably applied onto the member to be sound insulated, for example, in floor materials of automobiles or partition walls for partitioning an engine room from a vehicle interior without causing a substantial space between the sound insulating material and the member to be sound insulated, and can reliably conduct sound insulation treatment.

Figure 1

EP 1 923 421 A1

**Description**

TECHNICAL FIELD

The present invention relates to sound insulating materials excellent in sound insulation property and moldability.

BACKGROUND ART

Conventionally, various types of sound insulating materials have been commonly used in rides such as elevators as well as vehicles, e.g. automobiles and trains. Especially, in automobile applications, the entry of engine noises into the vehicle interior is a factor in deterioration of the interior sound environment. For this reason, sound insulating materials are used in engines, floor sheets, trunks and the like.

As such a sound insulating material, Patent Document 1 proposes a sound shielding sheet having an elastic modulus at 20°C of $5 \times 10^7$ Pa or less prepared by kneading a binder component containing 90% by weight or more of a rubber component, a filler material component and additives, followed by rolling.

This sound shielding sheet contains the filler material component in the binder component in order to possess sound shielding property by increasing the density and therefore it has a high specific gravity. As an adverse result, the sound shielding sheet is so hard that it is difficult to cut and it is poor in moldability in bending or the like.

Moreover, the sound shielding sheet is also poor in extensibility and therefore an attempt to form the sound shielding sheet with a mold has resulted in failure in forming it into a formed article having a desired shape due to generation of cracks in the sheet or breakage of the sheet.

Therefore, an attempt to adhere a sound shielding sheet to a complexly-shaped vibrating metal panel such as an automotive floor steel panel after forming the sheet into a shape in conformity with the shape of the vibrating metal panel will result in generation of a gap between the sound shielding sheet and the vibrating metal panel because it is impossible to form the sound shielding sheet accurately into the shape in conformity with the shape of the vibrating metal panel. This has adversely required an additional work of filling the gap.

Patent Document 1: JP 6-301385 A

DISCLOSURE OF THE INVENTION

PROBLEM TO BE SOLVED BY THE INVENTION

The present invention provides a sound insulating material excellent in sound insulation property and moldability.

MEANS FOR SOLVING THE PROBLEM

The sound insulating material of the present invention is characterized by comprising a thermoplastic resin foam and an inorganic compound contained in the thermoplastic resin foam in an amount of from 30 to 300 parts by weight per 100 parts by weight of the thermoplastic resin forming the thermoplastic resin foam.

That is, the sound insulating material of the present invention contains an inorganic compound in a thermoplastic resin foam and is characterized by containing the inorganic compound in an amount of from 30 to 300 parts by weight per 100 parts by weight of the thermoplastic resin forming the thermoplastic resin foam.

The thermoplastic resin constituting the thermoplastic resin foam is not particularly restricted, and examples thereof include organic materials such as polyolefin-based resins, for example, polyethylene-based resins, e.g. high density polyethylene, medium density polyethylene, low density polyethylene, linear low density polyethylene and ethylene-vinyl acetate copolymers, polypropylene-based resins, e.g. propylene homopolymers and copolymers of propylene and other olefins; polystyrene-based resins; polyester-based resins; polyamide-based resins; polyamide-based resins; and petroleum resins. Polyolefin-based resins are preferred, and use of a polyethylene-based resin and an ethylene-vinyl acetate copolymer in combination is more preferred because the sound insulating material excels in rigidity and therefore it has good workability since it hardly deflects or warps during handling.

By causing the thermoplastic resin foam to contain the inorganic compound in the predetermined amount, the sound insulating material is formed. Examples of the inorganic compound include metal hydroxides such as aluminum hydroxide and magnesium hydroxide as well as metal salts of inorganic acids, such as barium sulfate and magnesium sulfate. Since a sound insulating material is heated during molding, metal salts of inorganic acids, which are never decomposed by the application of heat, are preferred and barium sulfate is more preferred.

The content of the inorganic compound in the sound insulating material is limited to from 30 to 300 parts by weight, and preferably is from 75 to 250 parts by weight, per 100 parts by weight of the thermoplastic resin forming the thermoplastic resin foam because if the content is too small, the sound insulation property of the sound insulating material will be damaged, and if it is too large, the moldability of the sound insulating material will be damaged.

As described above, the sound insulating material of the present invention exerts excellent sound insulation performance due to filling of such predetermined amount of an inorganic compound in a thermoplastic resin foam. If a thermoplastic resin is filled in a high concentration with an inorganic filler, especially an inorganic compound having a great specific gravity like barium sulfate, generally, the moldability of the thermoplastic resin will be damaged due to decrease in extensibility thereof and therefore it will become difficult to apply molding methods like vacuum molding.

Then, in the sound insulating material of the present invention, in order to compensate the decrease in extensibility of the thermoplastic resin due to the inclusion of the inorganic compound, the thermoplastic resin is foamed to be in the form of a thermoplastic resin foam and the inorganic compound is contained in the thermoplastic resin foam. By forming a thermoplastic resin foam by foaming a thermoplastic resin in such a manner, it is possible to increase the elongation at breakage of the thermoplastic resin in its extension, and as a result, it is possible to improve the moldability of the thermoplastic resin foam, i.e., the sound insulating material, and it is possible to mold the sound insulating material accurately into a desired shape using a known molding method, such as vacuum molding.

In other words, because the sound insulating material of the present invention has been caused to have an improved extensibility by forming a thermoplastic resin foam by foaming a thermoplastic resin, it is possible to fill the thermoplastic resin foam with an inorganic compound in a high concentration and, as a result, the sound insulating material of the present invention excels in moldability as well as in sound insulation property.

The apparent density of the thermoplastic resin foam containing an inorganic compound, i.e., the sound insulating material is preferably from 0.1 to 0.8 g/cm$^3$, and is more preferably from 0.25 to 0.7 g/cm$^3$ because if it is too small, the sound insulation property of the sound insulating material may be damaged and if it is too large, the moldability of the sound insulating material may be damaged. Here, the apparent density of a sound insulating material is a value measured in accordance with JIS Z6767.

The resin magnification ratio of the thermoplastic resin constituting a thermoplastic resin foam is preferably 300% or more, and more preferably 500% or more because if it is too small, the moldability of a sound insulating material may be damaged due to decrease in the extensibility of the thermoplastic resin constituting the thermoplastic resin foam. The resin magnification ratio is preferably 1500% or less, and more preferably 1000% or less because if it is too large, a tear or crack may be formed in a sound insulating material during its molding.

The resin magnification ratio of the thermoplastic resin constituting a thermoplastic resin foam is a measure indicating the volumetric expansion ratio before and after the foaming of the thermoplastic resin itself, and specifically, is calculated from the formula 1 shown below. The density of the inorganic compound is represented by A g/cm$^3$ and the density of the thermoplastic resin constituting the thermoplastic resin foam is represented by B g/cm$^3$. The weight of the inorganic compound contained in the thermoplastic resin foam is represented by X g and the weight of the thermoplastic resin is represented by Y g. The apparent density of the entire thermoplastic resin foam containing an inorganic compound is set forth as C g/cm$^3$. When the thermoplastic resin constituting the thermoplastic resin foam is a mixture of two or more kinds of thermoplastic resins, the density of the thermoplastic resin is the density of the mixture of the thermoplastic resins.

[Numerical Formula 1]

$$\text{Resin magnification ratio (\%)} = \frac{\left(\dfrac{X + Y}{C} - \dfrac{X}{A}\right)}{\left(\dfrac{Y}{B}\right)} \times 100 \quad \cdots \quad \text{Formula 1}$$

The thickness of the sound insulating material is preferably from 2 to 6 mm because if it is too small, the sound insulation property of the sound insulating material may be damaged or the mechanical strength of the sound insulating material may be damaged, while if it is too large, the moldability of the sound insulating material may be damaged. The sound shielding property of the sound insulating material is preferably 5 dB or more, and more preferably 10 dB or more.

Next, the method for producing the sound insulating material of the present invention is described. The method for producing the sound insulating material of the present invention is not particularly restricted and may be, for example, (1) a method of producing a sound insulating material by supplying a foamable resin composition which comprises a thermoplastic resin, an inorganic compound and a pyrolysis-type foaming agent into a versatile stirring apparatus, such as a Labo Plastomill, followed by melt-kneading, then forming a foamable resin sheet by a versatile molding method, such as press molding, followed by optionally crosslinking this foamable resin sheet by application of ionizing radiations, such as electron beam, α-ray and β-ray, and then foaming the foamable resin sheet by heating it to a temperature not lower than the decomposition temperature of the pyrolysis-type foaming agent; or (2) a method of producing a sound insulating material continuously by supplying a foamable resin composition which comprises a thermoplastic resin, an inorganic compound and a pyrolysis-type foaming agent into an extruder, followed by melt-kneading, then extruding a foamable resin sheet continuously from the extruder, followed by optionally crosslinking this foamable resin sheet by application of ionizing radiations, such as electron beam, α-ray and β-ray, and then foaming the foamable resin sheet by heating it to a temperature not lower than the decomposition temperature of the pyrolysis-type foaming agent.

The pyrolysis-type foaming agent is not particularly restricted if it is one having heretofore been used for the production of foamed products. Examples thereof include azodicarbonamide, benzenesulfonyl hydrazide, dinitrosopentamethylenetetramine, toluenesulfonyl hydrazide, and 4,4-oxybis(benzenesulfonyl hydrazide). These may be used singly or in combination of two or more thereof.

The resulting sound insulating material is molded into a shape in conformity with the shape of a member to which sound insulation treatment is intended to be applied, which may be referred to as a "sound-insulated member", such as automotive floor steel panels, and then is used by being adhered to the sound-insulated member with an adhesive or the like. As the molding method for molding a sound insulating material, a conventionally known molding method may be used. Examples of such molding method include vacuum molding and pneumatic molding.

In this connection, since the sound insulating material has been formed accurately in conformity with the shape of the sound-insulated member, it is possible to adhere the sound insulating material to the sound-insulated member forming almost no gap between the sound insulating material and the sound-insulated member and therefore sound insulation treatment can be performed easily.

EFFECT OF THE INVENTION

The sound insulating material of the present invention has excellent sound insulating properties, especially sound shielding property, and also is excellent in moldability because it comprises a thermoplastic resin foam and an inorganic compound contained in the thermoplastic resin foam in an amount of from 30 to 300 parts by weight per 100 parts by weight of the thermoplastic resin constituting the thermoplastic resin foam.

Therefore, the sound insulating material of the present invention can be molded accurately into a shape in conformity with the shape of a sound-insulated member to which sound insulation treatment is intended to be applied using a known molding method. Accordingly, it can be adhered stably to, for example, automobile floor materials and sound-insulated members such as partition walls separating an engine room and the vehicle interior, almost without forming any gap between the sound insulating material and the sound-insulated member and it is possible to subject the sound-insulated member to sound insulation treatment certainly.

Moreover, when the thermoplastic resin constituting the thermoplastic resin foamed sheet is a polyolefin-based resin, the sound insulating material of the present invention excels in rigidity and therefore it has good workability since it hardly deflects or warps during handling of the sound insulating material.

Furthermore, in the sound insulating material of the present invention, when the inorganic compound is a metal salt of an inorganic acid, it remains stably in the thermoplastic resin foam despite the heat applied during the molding of the sound insulating material and it is possible to mold the sound insulating material into a desired shape without damaging the sound insulation performance thereof.

The sound insulating material of the present invention has more improved sound insulation property and moldability when it has an apparent density of from 0.1 to 0.8 $g/cm^3$.

BRIEF DESCRIPTION OF THE DRAWING

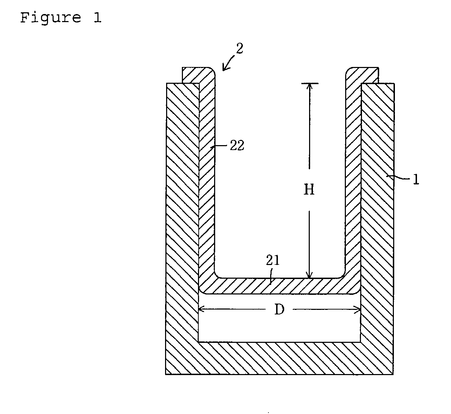

[Fig. 1] A schematic sectional view illustrating the procedure of measuring the moldability of a sound insulating material.

DESCRIPTION OF THE REFERENTIAL NUMERALS

1    Female mold
2    Molded article
21   Bottom
22   Peripheral wall

BEST MODE FOR CARRYING OUT THE INVENTION

(Example 1)

A foamable resin composition composed of 65 parts by weight of low density polyethylene (commercial name "LE520" produced by Sumitomo Mitsui Polyolefin Co.), 35 parts by weight of an ethylene-vinyl acetate copolymer (commercial name "EVAFLEX EV460" produced by DuPont-Mitsui Polychemicals, Co., Ltd. ; vinyl acetate content: 19% by weight), 150 parts by weight of barium sulfate (commercial name "W-1" produced by Takehara Kagaku Kogyo Co., Ltd.), 4 parts by weight of azodicarbonamide (commercial name "Uniform AZ SO-40" produced by Otsuka Chemical Co., Ltd.) and 1 part by weight of zinc stearate (commercial name "SZ-2000" produced by Sakai Chemical Industry Co., Ltd.) as a foaming aid was fed into a Labo Plastomill and was kneaded at 110°C for 15 min to mix uniformly. The foamable resin composition was press molded at 110°C to yield a foamable resin sheet having a thickness of 2.5 mm.
The foamable resin sheet was crosslinked by irradiating the foamable resin sheet with 2.0 Mrad electron beam at a condition of 800 KV. This foamable resin sheet was supplied into an oven, and the foamable resin sheet was left at rest at 240°C for 80 seconds to foam. Thus, a sound insulating material was obtained in which barium sulfate was contained in a foamed sheet made of a polyolefin-based resin composed of low density polyethylene and an ethylene-vinyl acetate copolymer. The sound insulating material obtained had an apparent density of 0.33 $g/cm^3$ and a thickness of 3.7 mm. The resin magnification ratio of the polyolefin-based resin constituting the thermoplastic resin foamed sheet was 650.4%. The polyolefin-based resin composed of the low density polyethylene and the ethylene-vinyl acetate copolymer had a density of 0.9 $g/cm^3$ and the barium sulfate had a density of 4.3 $g/cm^3$.

(Example 2)

A sound insulating material was obtained in the same manner as in Example 1 except for changing the amount of barium sulfate to 100 parts by weight instead of 150 parts by weight, the amount of azodicarbonamide to 3 parts by weight instead of 4 parts by weight, and the amount of zinc stearate to 0.8 parts by weight instead of 1 part by weight. The sound insulating material obtained had an apparent density of 0.31 $g/cm^3$ and a thickness of 3.6 mm. The resin magnification ratio of the polyolefin-based resin constituting the thermoplastic resin foamed sheet was 559.7%.

(Example 3)

A sound insulating material was obtained in the same manner as in Example 1 except for changing the amount of barium sulfate to 50 parts by weight instead of 150 parts by weight, the amount of azodicarbonamide to 2 parts by weight instead of 4 parts by weight, and the amount of zinc stearate to 0.6 parts by weight instead of 1 part by weight. The sound insulating material obtained had an apparent density of 0.32 $g/cm^3$ and a thickness of 3.7 mm. The resin magnification ratio of the polyolefin-based resin constituting the thermoplastic resin foamed sheet was 411.4%.

(Example 4)

A sound insulating material was obtained in the same manner as in Example 1 except for changing the amount of barium sulfate to 50 parts by weight instead of 150 parts by weight and the thickness of the foamable resin sheet to 2. 0 mm instead of 2.5 mm. The sound insulating material obtained had an apparent density of 0.16 $g/cm^3$ and a thickness of 3.7 mm. The resin magnification ratio of the polyolefin-based resin constituting the thermoplastic resin foamed sheet was 833.3%.

(Comparative Example 1)

A sound insulating material was obtained in the same manner as in Example 1 except for using no barium sulfate and changing the amount of azodicarbonamide to 1.4 parts by weight instead of 4 parts by weight, and the amount of zinc stearate to 0.4 parts by weight instead of 1 part by weight. The sound insulating material obtained had an apparent density of 0.40 $g/cm^3$ and a thickness of 3.7 mm. The resin magnification ratio of the polyolefin-based resin constituting the thermoplastic resin foamed sheet was 225.0%.

(Comparative Example 2)

A sound insulating material was obtained in the same manner as in Example 1 except for using no barium sulfate and changing the thickness of the foamable resin sheet to 2.0 mm instead of 2.5 mm. The sound insulating material obtained had an apparent density of 0.11 $g/cm^3$ and a thickness of 3.8 mm. The resin magnification ratio of the polyolefin-based resin constituting the thermoplastic resin foamed sheet was 818.2%.

(Comparative Example 3)

A sound insulating material was obtained in the same manner as in Example 1 except for changing the amount of barium sulfate to 350 parts by weight instead of 150 parts by weight, the amount of azodicarbonamide to 6 parts by weight instead of 4 parts by weight, the amount of zinc stearate to 1.3 parts by weight instead of 1 part by weight and the thickness of the foamable resin sheet to 2.0 mm instead of 2.5 mm. The sound insulating material obtained had an apparent density of 0.61 g/cm$^3$ and a thickness of 3.6 mm. The resin magnification ratio of the polyolefin-based resin constituting the thermoplastic resin foamed sheet was 590.7%.

(Comparative Example 4)

An ethylene-propylene-diene rubber (EPDM) sheet (apparent density: 2.4 g/cm$^3$, thickness: 1.7 mm) was used as a sound insulating material.
The moldability and sound insulation property of the sound insulating materials obtained were measured in the procedures given below and the results are shown in Table 1.

(Moldability)

A sound insulating material was heated using a far-infrared heater so that the temperature of both surfaces of the sound insulating material would be 140°C. Next, a closed-end cylindrical female mold 1 shown in Fig. 1 was prepared. The sound insulating material was vacuum molded with the female mold 1 and as a result a closed-end cylindrical molded article 2 was obtained which had a flat circular bottom 21 and a cylindrical peripheral wall 22 extending perpendicularly from the periphery of the bottom 21. In the vacuum molding of the sound insulating material, the sound insulating material was vacuum molded as deep as possible while satisfying three conditions, namely, that the thickness of the peripheral wall 22 of the molded article 2 is uniform, that neither cracks nor holes are formed in the bottom 21, and that the thickness of the bottom 21 is almost equal to the thickness of the peripheral wall 22.
A vacuum molding maximum draw ratio (H/D) was calculated from the diameter D of the outer bottom of the molded article and the depth H of the sound insulating material vacuum sucked in the female mold 1, on the basis of the formula 2 given below. The ratio was used as a measure of the moldability. The greater the vacuum molding maximum draw ratio, the better the moldability of the sound insulating material.

```
Vacuum molding maximum draw ratio (H/D) = depth H/diameter D

··· Formula 2
```

In Examples 1 to 3, the vacuum molding maximum draw ratios were 0.8 or more, and each sound insulating material had excellent moldability. In Comparative Example 1, the vacuum molding maximum draw ratio was 0.6. At such a level of moldability, it is not possible to mold a sound insulating material accurately into a shape in conformity with the shape of a mold. The sound insulating material of Comparative Example 3 had poor moldability. It was almost impossible to vacuum mold the sound insulating material due to immediate formation of a hole in the bottom. The sound insulating material of Comparative Example 4 had poor moldability. It was impossible to vacuum mold the sound insulating material due to immediate formation of a hole in the bottom.

(Sound insulation property)

The sound shielding property of a sound insulating material was measured in accordance with JIS A1416, and it was used as a measure of the sound insulation property. In the specific procedure, a sound insulating material was mounted into an opening for mounting a sound insulating material therein provided in a partition door between a sound generating room and a reverberation room, the opening being in a square form 600 mm on each side. Thus, the opening was closed completely. Then, a sound of 90 dB was generated from the sound source in the sound generating room, and the loudness level A was measured in the reverberation room using a noise level meter (commercial name "Precise Noise Level Meter NA-27" produced by RION Co., Ltd.).
Next, in a state where the opening was completely open with no sound insulating material mounted in the opening for mounting a sound insulating material, the loudness level B was measured in the same way as mentioned above. The sound shielding property was calculated based on the following

```
formula 3:

Sound shielding property (dB)

= (loudness level B) - (loudness level A) ··· Formula 3
```

[Table 1]

| | | Example 1 | Example 2 | Example 3 | Example 4 | Comparative Example 1 | comparative Example 2 | Comparative Example 3 | Comparative Example 4 |
|---|---|---|---|---|---|---|---|---|---|
| Foamable resin composition (parts by weight) | Low density polyethylene | 65 | 65 | 65 | 65 | 65 | 65 | 65 | - |
| | Ethylene-vinyl acetate copolymer | 35 | 35 | 35 | 35 | 35 | 35 | 35 | - |
| | Barium sulfate | 150 | 100 | 50 | 50 | - | - | 350 | - |
| | Azodicarbonamide | 4 | 3 | 2 | 4 | 1.4 | 4 | 6 | - |
| | Zinc stearate | 1 | 0.8 | 0.6 | 1 | 0.4 | 1 | 1.3 | - |
| Sound insulating material | Apparent density (g/cm$^3$) | 0.33 | 0.31 | 0.32 | 0.16 | 0.40 | 0.11 | 0.61 | 2.40 |
| | Thickness (mm) | 3.7 | 3.6 | 3.7 | 3.7 | 3.7 | 3.8 | 3.6 | 1.7 |
| | Resin magnification ratio (%) | 650.4 | 559.7 | 411.4 | 833.3 | 225.0 | 818.2 | 590.7 | - |
| | Vacuum molding maximum draw ratio (H/D) | 0.90 | 0.90 | 0.92 | 0.82 | 0.60 | 0.80 | Failed in molding | Failed in molding |
| | Sound insulation property (dB) | 10.4 | 10.2 | 10.2 | 5.3 | 10 | 3.7 | 12.0 | 11.5 |

INDUSTRIAL APPLICABILITY

The sound insulating material of the present invention can be applied to sound-insulated members having various shapes because it has excellent sound insulation property and excellent moldability. It therefore can be used in wide variety of applications such as automobile applications, railway applications and building applications.

**Claims**

1. A sound insulating material comprising a thermoplastic resin foam and an inorganic compound contained in the thermoplastic resin foam in an amount of from 30 to 300 parts by weight per 100 parts by weight of the thermoplastic resin constituting the thermoplastic resin foam.

2. The sound insulating material according to claim 1, wherein the thermoplastic resin constituting the thermoplastic resin foam is a polyolefin-based resin.

3. The sound insulating material according to claim 1, wherein the inorganic compound is a metal salt of an inorganic acid.

4. The sound insulating material according to claim 1, wherein the sound insulating material has an apparent density of from 0.1 to 0.8 g/cm$^3$.

5. The sound insulating material according to claim 1, wherein the inorganic compound is contained in an amount of from 75 to 250 parts by weight per 100 parts by weight of the thermoplastic resin constituting the thermoplastic resin foam.

6. The sound insulating material according to claim 1, wherein the inorganic compound is barium sulfate.

7. The sound insulating material according to claim 1, wherein the resin magnification ratio of the thermoplastic resin constituting the thermoplastic resin foam is 300% or more.

Figure 1

**INTERNATIONAL SEARCH REPORT**

International application No.
PCT/JP2006/317566

A. CLASSIFICATION OF SUBJECT MATTER
*C08J9/06*(2006.01)i, *G10K11/16*(2006.01)i, *G10K11/162*(2006.01)i

According to International Patent Classification (IPC) or to both national classification and IPC

B. FIELDS SEARCHED

Minimum documentation searched (classification system followed by classification symbols)
C08J9/04-9/14, G10K11/16, G10K11/162

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 4-297679 A (Iskra Industry Co., Ltd., Yugen Kaisha Nippon Ekusuteria Kenkyusho), 21 October, 1992 (21.10.92), Full text (Family: none) | 1-7 |
| X | JP 2003-113266 A (Du Pont-Mitsui Polychemicals Co., Ltd.), 18 April, 2003 (18.04.03), Claims; Par. Nos. [0037], [0057] (Family: none) | 1-7 |
| X | JP 48-85649 A (The Lion Fat & Oil Co., Ltd.), 13 November, 1973 (13.11.73), Full text (Family: none) | 1-7 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 November, 2006 (06.11.06) | 14 November, 2006 (14.11.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 923 421 A1**

## REFERENCES CITED IN THE DESCRIPTION

### Patent documents cited in the description

- JP 6301385 A